# EUROPEAN PATENT SPECIFICATION

(11) **EP 1 796 954 B1**
(45) Date of publication and mention of the grant of the patent: **14.05.2008**
(21) Application number: 05718252.9
(22) Date of filing: 23.03.2005
(51) Int. Cl.: B62J 9/00

(54) **BICYCLE SADDLE WITH A QUICK-CONNECT STRUCTURE**
FAHRRADSATTEL MIT EINER SCHNELLVERBINDUNGSSTRUKTUR
SELLE DE VELO EQUIPEE D'UNE STRUCTURE A MONTAGE RAPIDE

(30) Priority: 17.09.2004 IT VI20040217
(43) Date of publication of application: 20.06.2007
(73) Proprietor: SELLE ROYAL S.P.A., 36100 Vicenza (IT)
(72) Inventor: BIGOLIN, Barbara, I-31011 ASOLO (IT)
(74) Representative: Vannini, Mario
(86) International application number: PCT/IB2005/000753
(87) International publication number: WO 2006/030259

(56) References cited:
- EP-A- 0 578 214
- WO-A-03/076257
- DE-B- 1 161 773
- DE-U1- 9 408 781
- FR-A- 2 736 887
- US-A- 5 127 563
- US-A- 5 496 089

## Description

### Field of the Invention

The present invention finds application in the field of sport and leisure accessories, and particularly relates to a quick-connect structure for bicycle saddles.

The invention further relates to the components of the quick-connect lock according to the invention.

### Prior art

One of the drawbacks associated with two-wheeled vehicles, particularly bicycles and motorcycles, is known to be the limited luggage-carrying capacity of such means of transport.

Especially in bicycles, a problem may also arise from the need of carrying emergency equipment and accessories to be used in case of mechanical breakdowns, including screw drivers or wrenches. Special containers or tool kits have been designed to this purpose.

A number of technical arrangements have been developed to solve the problem of carrying such containers.

Document EP-A-1413504 discloses and claims a bicycle saddle having a hollow compartment at its front end, for storage of equipment. This arrangement is rather uncomfortable and bulky and requires a rather large saddle.

From WO03-013946, an apparatus is known that allows to attach a tool kit to a bicycle seat post. This arrangement is also bulky and impractical, and has the advantage of at least partly preventing seat post adjustment, thereby limiting the function of this component.

US-A-5593126 discloses a system for attaching accessories to the saddle, using a clip to be connected to the saddle rail. This arrangement also has drawbacks in that, in addition to limiting rail adjustment, it uses a connector member between the saddle and the accessory to be connected, which may loosen or fail with time.

Other arrangements more or less associated to the above, are disclosed in US-A-5655694, WO03-024770, US2004-149792, US-A-5893501 and US-A-4566617.

From WO02-038436 a connector system located behind a bicycle saddle is known, which comprises a support designed to house a tool kit, and is directly connected to the saddle. In addition to the same problem of bulkiness as the above models, such arrangement has the disadvantage of causing undesired noisy vibrations of the objects being carried, especially when they are made of metal. Also, the connector device alone is attached to the rear of the saddle by appropriate attachment means, which may loosen and cause an accidental loss of accessories.

Form FR-A-2736887 is known a bicycle saddle with a quick-connect structure having all the features of the preamble of the claim 1. However, in such known bicycle saddle no provisions are provided in order to avoid the interaction between the quick-connect structure and the bicycle rail and the seat post.

### Summary of the invention

The object of this invention is to overcome the above drawbacks, by providing a quick-connect structure for a bicycle saddle which achieves high efficiency and has a relatively simple construction.

A particular object is to provide a structure that allows an easy and safe connection of accessories to the bicycle saddle.

Another object of the invention is to provide a structure that does not limit the adjustment of saddle's sliding parts, such as the seat post or the rails.

A further object is to provide a structure having minimum space requirements.

These objects, as well as other objects that will be apparent hereafter, are achieved by providing a bicycle saddle with a quick-connect structure, according to claim 1.

Thanks to this particular arrangement, the structure of the invention allows an easy and safe connection of accessories to the bicycle saddle.

According to a further aspect of the invention, there are provided, according to the independent claim 15, a male member of a quick-connect structure for a bicycle saddle, which is designed to be rigidly attached to an object, such as a tool kit or the like and, according to claim 16, a female member of a quick-connect structure for a bicycle saddle, which is an integral part of the saddle body.

### Brief description of the drawings

Further characteristics and advantages of the invention will be more apparent from the detailed description of a few preferred, non-exclusive embodiments of a quick-connect structure according to the invention, which is described as a non-limiting example with the help of the annexed drawings, in which:

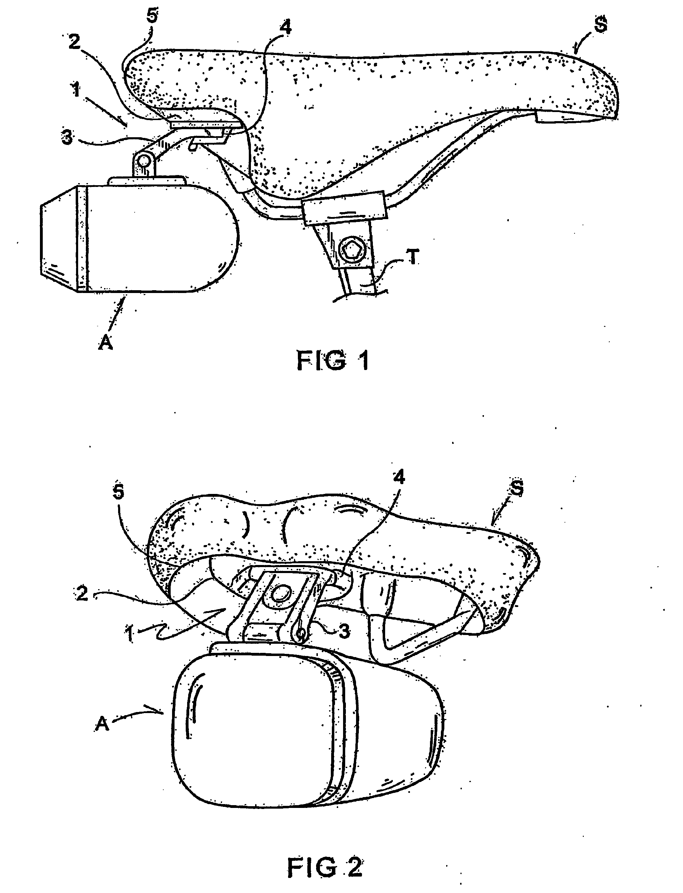

FIG. 1 is a partly sectional side view of a bicycle saddle comprising the structure according to the invention;
FIG. 2 is a rear perspective view of a bicycle saddle comprising the structure according to the invention;
FIG. 3 is a side view of a particular embodiment of a detail of FIG. 1;
FIG. 4 is a side view of a particular embodiment of a detail of FIG. 1;
FIG. 5 is a top view of a particular embodiment of a detail of FIG. 1;
FIG. 6 is an axonometric view of a particular embodiment of a detail of FIG. 1;
FIG. 7 is a plan view of a detail of FIG. 1;
FIG. 8 is a partly sectional side view, taken on a plane VII-VII, of a detail of Fig. 1.

### Detailed description of a preferred embodiment

Referring to the above figures, a quick-connect structure according to the invention, generally designated by reference numeral 1, is particularly suitable for removably coupling an accessory A, such as a tool kit, a mudguard, a reflector, a water bottle cage or the like, to a saddle S.

The saddle S has at least one load-bearing body 2 to be attached to a bicycle frame T, which is made, for instance, by plastics injection molding.

The structure 1 further comprises at least one male member 3, which may be snap-fitted in a corresponding female member 4. The male 3 and female 4 members are associated either to the saddle S or to the accessory A.

According to the invention, at least one of the male 3 and female 4 members is integrally and monolithically formed in the body 2 of the saddle S.

Advantageously, the other member may be rigidly attached to the accessory A.

Thus, accessories of any type may be easily and safely connected to the bicycle saddle, with no connection members therebetween which may be easily broken or damaged.

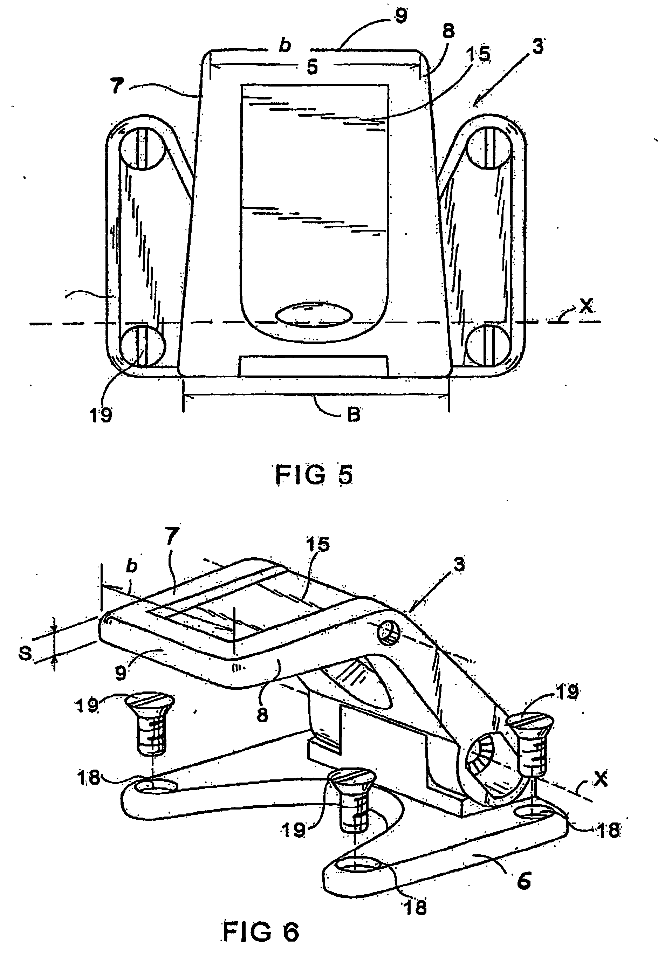

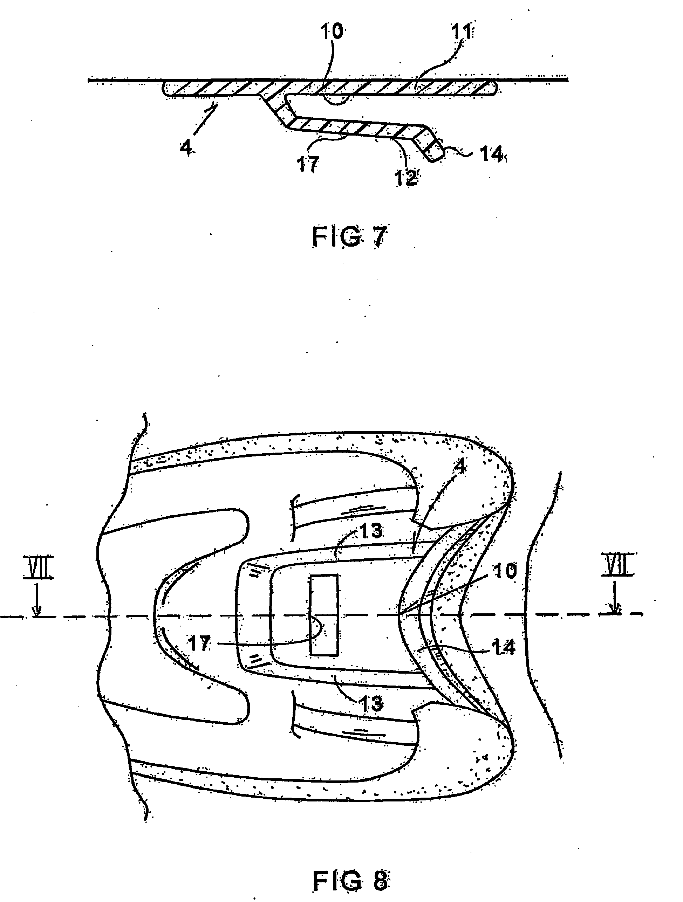

In the embodiment that is shown in FIGS. 6 and 7 by way of indication and without limitation, the female member 4 may integrally and monolithically formed in the body 2 in the proximity of its rear edge 5.

By this arrangement, the presence of the structure does not limit the adjustment of the saddle's sliding parts, such as the seat post or the saddle rail, as the latter do not interact with any part of the structure.

Suitably, the male member 3 may include a first elongated portion 6, for rigid connection to the accessory A and a second portion 7, for removable connection to the female member 4.

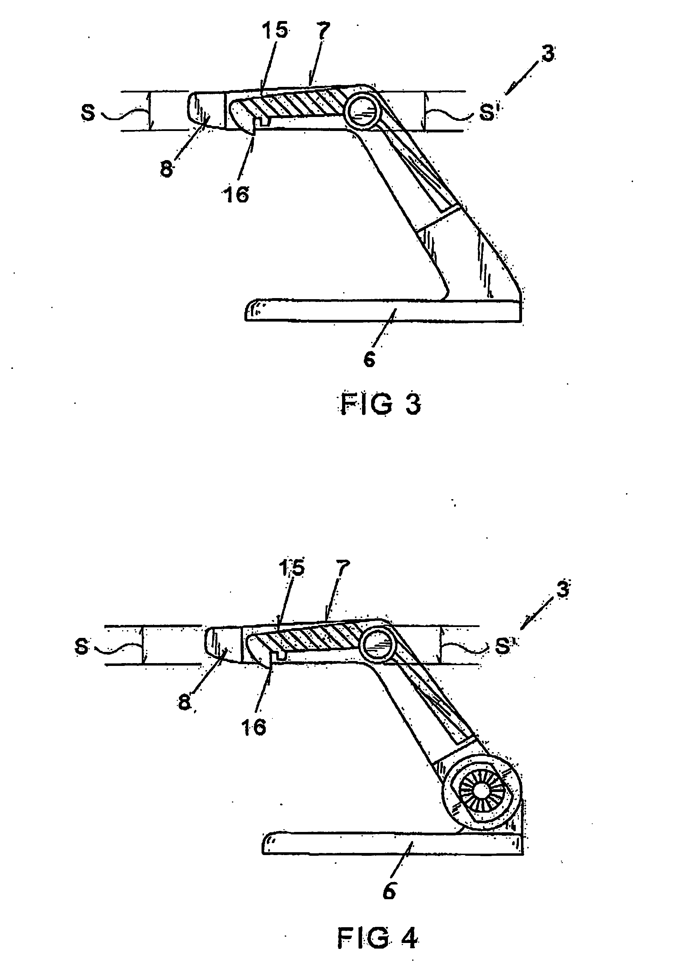

According to a first preferred embodiment, the first portion 6 and the second portion 7 may be joined together to form a predetermined angle a, as shown in FIG. 3.

In another preferred embodiment, as shown in FIG. 4, the portions 6 and 7 may be rotatably coupled for mutual relative rotation about a predetermined axis X.

Thus, the accessory A may be even more conveniently mounted. The possibility of mutual articulation-of the portions 6 and 7 allows to place the accessory A in the most convenient position and to facilitate the connection/release thereof to and from the saddle S, regardless of its shape and relative adjustments.

In both embodiments, the second portion 7 may have an elongated extension 8 having a substantially prismatic shape, tapering toward the free end 9, for insertion in a complementary receptacle 10 that defines the female member 4.

Suitably, the extension 8 may have a substantially trapezoidal plan shape, with a decreasing thickness s and a shorter base b with rounded edges.

This facilitates the introduction of the extension 8 in the receptacle 10.

The shape of the receptacle 10 may in turn be complementary to that of the extension 8, with an upper wall 11 and a lower wall 12 joined together by a pair of side walls 13 and 13'.

Advantageously, the walls 11 and 12 may have curved edges 14, to act as guide surfaces to introduce the extension 8 in the receptacle 10.

Suitably, the height h of the latter will be not less than the thickness s' of the extension 8 at its longer base B. Thus, the introduction of the extension 8 in the receptacle 10 is fast and effective, even when the user is in a rotated position, as is frequently the case.

The extension 8 may be prevented from accidentally disengaging from the receptacle 10 by a pulling action, by providing it with suitably snap lock means 15.

Preferably, these lock means 15 are a projection or a tooth 16, which is engageable in a corresponding slot 17 in the receptacle 10, e.g. formed in the lower wall 12 thereof. This will assure a firm and safe lock between the male 3 and female 4 members.

Suitably, the first portion 6 may have holes 18 for receiving screws or rivets 19 to be fastened to the accessory A, to assure a stable and effective coupling thereof.

From the above disclosure, the structure of the invention proves to fulfill the proposed objects and particularly meets the requirement of allowing an easy and safe connection of accessories to the bicycle saddle.

Thanks to the monolithic integration of the female member 4 in the body 2 of the saddle S, and thanks to the particular configuration of the male member 3, accessories A may be firmly connected to a saddle S while minimizing the risks of accidental losses or failures.

The structure of the invention is susceptible of a number of changes and variants, within the inventive concept disclosed in the appended claims. All the details thereof may be replaced by other technically equivalent parts, and the materials may vary depending on different needs, without departure from the scope of the invention.

While the structure has been described with particular reference to the accompanying figures, the numerals referred, to in the disclosure and claims are only used for the sake of a better intelligibility of the invention and shall not be intended to limit the claimed scope in any manner.

## Claims

1. A bicycle saddle (S) with a quick-connect structure (3, 4) for removably coupling an accessory (A) with the saddle (S), the saddle (S) having at least one load-bearing body (2) to which a saddle rail can be coupled, said load bearing body being attachable to a bicycle frame (T) by means of a seat post and a saddle rail, the quick connect structure (3, 4) comprising at least one male member (3) and at least one female member (4), said at least one male member (3) being snapfittable in the corresponding at least one female member (4), said male or female members (3, 4) either being associated to said saddle (S) or associatable to an accessory (A).
**characterized in that** at least one of said male (3) or female (4) members is integrally and monolithically formed in the load bearing body (2) of the saddle (S) at the rear edge (5) thereof avoiding any interaction with said seat post and saddle rail.

2. Bicycle saddle as claimed in claim 1, **characterized in that** the other of said male member (3) and said female member (4) is rigidly attachable to the accessory (A).

3. Bicycle saddle as claimed in claim 1, **characterized in that** said female member (4) is integrally and monolithically formed in said body (2).

4. Bicycle saddle as claimed in claim 3, **characterized in that** said male member (3) includes a first portion (6) for rigid connection to the accessory (A) and a second portion (7), for removable connection to said female member (4).

5. Bicycle saddle as claimed in claim 4, **characterized in that** said second portion (7) has an elongated appendix (8) of a substantially prismatic shape tapered toward the free end (9) thereof, for insertion in a complementarily shaped receptacle (10) defining said female member (4).

6. Bicycle saddle as claimed in claim 5, **characterized in that** said appendix (8) has an upper substantially trapezoidal shape, with a decreasing thickness (s) and a minor base (b) with rounded edges to facilitate the introduction of said appendix (8) in said receptacle (10).

7. Bicycle saddle as claimed in claim 5, **characterized in that** the shape of said receptacle (10) is complementarily shaped with respect to said appendix (8), and has an upper wall (11) and a lower wall (12) joined together by a pair of side walls (13, 13').

8. Bicycle saddle as claimed in claim 7, **characterized in that** said upper (11) and lower (12) walls have curved edges (14), to facilitate the introduction of said appendix (8) in said receptacle (10).

9. Bicycle saddle as claimed in claim 7, **characterized in that** said seat (10) has a height (h) that is at least equal to the thickness (s') of said appendix (8) in correspondence of its major base (B).

10. Bicycle saddle as claimed in claim 5, **characterized in that** said appendix (8) has snap-locking means (15) to prevent accidental disengagement thereof from said receptacle (10) by a pulling action.

11. Bicycle saddle as claimed in claim 10, **characterized in that** said snap lock means (15) include a projection or a tooth (16), which is engageable in a corresponding slot (17) in the receptacle (10).

12. Bicycle saddle as claimed in claim 4, **characterized in that** said first (6) and said second portion (7) are joined together and form a predetermined angle (α).

13. Bicycle saddle as claimed in claim 4, **characterized in that** said first portion (6) and said second portion (7) are rotatably coupled for mutual relative rotation about a predetermined axis (X).

14. Bicycle saddle as claimed in claim 4, **characterized in that** said first portion (6) has holes (18) for receiving screws or rivets (19) to be fastened to the accessory (A).

## Patentansprüche

1. Fahrradsattel (S) mit einer Schnell-Verbindungsstruktur (3, 4) zur lösbaren Verbindung eines Zubehörs (A) mit dem Sattel (S), wobei der Sattel (S) mindestens ein lasttragendes Gehäuse (2) aufweist, an das eine Sattelschiene angeschlossen werden kann, das lasttragende Gehäuse an einen Fahrradrahmen (T) montierbar ist mit Hilfe einer Sitzstütze und einer Sattelschiene, wobei die Schnell-Verbindungsstruktur (3, 4) mindestens ein männliches Element (3) und mindestens ein weibliches Element (4) umfasst, das mindestens eine männliche Element (3) in das entsprechende mindestens eine weibliche Element (4) passend eingeschnappt werden kann und die männlichen oder weiblichen Elemente (3, 4) entweder mit dem Sattel (S) verbunden sind oder mit einem Zubehör (A) verbindbar sind, **dadurch gekennzeichnet, dass** mindestens eines der männlichen oder weiblichen Elemente (4) integral und monolithisch in dem lasttragendes Gehäuse (2) des Sattels (S) an dessen hinteren Rand (5) gebildet ist, so dass jegliches Zusammenwirken mit der Sitzstütze und Sattelschiene vermieden ist.

2. Fahrradsattel gemäß Anspruch 1, **dadurch gekennzeichnet, dass** das andere des männlichen Elements (3) und des weiblichen Elements (4) fest verbindbar ist mit dem Zubehör (A).

3. Fahrradsattel gemäß Anspruch 1, **dadurch gekennzeichnet, dass** weibliche Element (4) integral und monolithisch in dem Gehäuse (2) gebildet ist.

4. Fahrradsattel gemäß Anspruch 3, **dadurch gekennzeichnet, dass** das männliche Element (3) einen ersten Abschnitt (6) aufweist zur festen Verbindung mit dem Zubehör (A) und einen zweiten Abschnitt (7) zur lösbaren Verbindung mit dem weiblichen Element (4).

5. Fahrradsattel gemäß Anspruch 4, **dadurch gekennzeichnet, dass** der zweite Abschnitt (7) einen länglichen Fortsatz (8) aufweist mit einer im wesentlichen prismatischen Form, die zu dessen freiem Ende (9) geneigt ist zum Einsatz in eine komplementär geformte Aufnahme (10), die das weibliche Element (4) bildet.

6. Fahrradsattel gemäß Anspruch 5, **dadurch gekennzeichnet, dass** der Fortsatz (8) eine obere im wesentlichen trapezoidale Form hat mit einer abnehmenden Dicke (s) und einer kleineren Basis (b) mit runden Rändern, um das Einführen des Fortsatzes (8) in die Aufnahme (10) zu erleichtern.

7. Fahrradsattel gemäß Anspruch 5, **dadurch gekennzeichnet, dass** die Form der Aufnahme (10) komplementär geformt ist mit Bezug auf den Fortsatz (8) und eine obere Wand (11) und eine untere Wand (12) aufweist, die mittels einem Paar von Seitenwänden (13, 13') zusammen gefügt sind.

8. Fahrradsattel gemäß Anspruch 7, **dadurch gekennzeichnet, dass** die oberen (11) und unteren (12) Wände gekrümmte Ränder (14) aufweisen, um das Einführen des Fortsatzes (8) in die Aufnahme (10) zu erleichtern.

9. Fahrradsattel gemäß Anspruch 7, **dadurch gekennzeichnet, dass** der Sitz (10) eine Höhe (h) hat, die mindestens gleich ist zu der Dicke (s') des Fortsatzes (8) entsprechend dessen größter Basis (B).

10. Fahrradsattel gemäß Anspruch 5, **dadurch gekennzeichnet, dass** der Fortsatz (8) Schnappverschluss-Einrichtungen (15) aufweist, um dessen unbeabsichtigtes Lösen von der Aufnahme (10) durch eine Zugwirkung zu verhindern.

11. Fahrradsattel gemäß Anspruch 10, **dadurch gekennzeichnet, dass** die Schnappverschluss-Einrichtungen (15) einen Vorsprung oder einen Zahn (16) umfassen, der in einen entsprechenden Schlitz (17) in der Aufnahme (10) eingreift.

12. Fahrradsattel gemäß Anspruch 4, **dadurch gekennzeichnet, dass** der erste (6) und der zweite Abschnitt (7) zusammen gefügt sind und einen vorbestimmten Winkel (α) bilden.

13. Fahrradsattel gemäß Anspruch 4, **dadurch gekennzeichnet, dass** der erste Abschnitt (6) und der zweite Abschnitt (7) drehbar verbunden sind für gegenseitige relative Drehung um eine vorbestimmte Achse (x).

14. Fahrradsattel gemäß Anspruch 4, **dadurch gekennzeichnet, dass** der erste Abschnitt (6) Öffnungen (18) aufweist zur Aufnahme von Schrauben oder Nieten (19) zur Befestigung an das Zubehör (A).

## Revendications

1. Selle de bicyclette (S) équipée d'une structure de montage rapide (3, 4) destinée à accoupler un accessoire (A) à la selle (S) de façon démontable, la selle (S) ayant au moins un corps support de charge (2) auquel un rail de selle peut être accouplé, ledit corps porteur de charge pouvant être attaché à un cadre de bicyclette (T) au moyen d'une tige de siège et d'un rail de selle, la structure de montage rapide (3, 4) comprenant au moins un élément mâle (3) et au moins un élément femelle (4), ledit au moins un élément mâle (3) pouvant être ajusté par encliquetage dans ledit au moins un élément femelle correspondant (4), lesdits éléments mâle ou femelle (3, 4) étant, soit associés à ladite selle (S), soit aptes à être associés à un accessoire (A),
**caractérisée en ce que** au moins un desdits éléments mâle (3) ou femelle (4) est formé en une seule pièce et de façon monolithique dans le corps support de charge (2) de la selle (S) au niveau du bord arrière (5) de ce dernier, en évitant toute interaction avec ladite tige de siège et avec ledit rail de selle.

2. Selle de bicyclette selon la revendication 1, **caractérisée en ce que** l'autre desdits éléments mâle (3) et femelle (4) peut être fixé rigidement à l'accessoire (A).

3. Selle de bicyclette selon la revendication 1, **caractérisée en ce que** ledit élément femelle (4) est formé intégralement et de façon monolithique dans ledit corps (2).

4. Selle de bicyclette selon la revendication 3, **caractérisée en ce que** ledit élément mâle (3) comprend une première partie (6) destinée à être reliée rigidement à l'accessoire (A) et une deuxième partie (7) destinée à être reliée à l'élément femelle (4) de façon démontable.

5. Selle de bicyclette selon la revendication 4, **caractérisée en ce que** ladite deuxième partie (7) possède un appendice allongé (8) de forme sensiblement prismatique, à section décroissante vers son extrémité libre (9), destiné à être inséré dans un réceptacle (10) de forme complémentaire qui définit ledit élément femelle (4).

6. Selle de bicyclette selon la revendication 5, **caractérisée en ce que** ledit appendice (8) possède une forme supérieure sensiblement trapézoïdale possédant une épaisseur décroissante (s) et une petite base (B) à bords arrondis pour faciliter l'introduction dudit appendice (8) dans ledit réceptacle (10).

7. Selle de bicyclette selon la revendication 5, **caractérisée en ce que** la forme dudit réceptacle (10) est complémentaire de celle dudit appendice (8) et possède une paroi supérieure (11) et une paroi inférieure (12) réunies l'une à l'autre par une paire de parois latérales (13, 13').

8. Selle de bicyclette selon la revendication 7, **caractérisée en ce que** lesdites parois supérieure (11) et inférieure (12) ont des bords courbes (14) pour faciliter l'introduction dudit appendice (8) dans ledit réceptacle (10).

9. Selle de bicyclette selon la revendication 7, **caractérisée en ce que** ledit réceptacle (10) a une hauteur (h) qui est au moins égale à l'épaisseur (s') dudit appendice (8) au niveau de sa grande base (B).

10. Selle de bicyclette selon la revendication 5, **caractérisée en ce que** ledit appendice (8) possède des moyens de verrouillage à encliquetage (15) pour éviter qu'il se dégage accidentellement dudit réceptacle (10) sous l'effet d'une action de traction.

11. Selle de bicyclette selon la revendication 10, **caractérisée en ce que** lesdits moyens de verrouillage à encliquetage (15) comprennent une saillie ou une dent (16) qui peut être engagée dans une fente correspondante (17) ménagée dans le réceptacle (10).

12. Selle de bicyclette selon la revendication 4, **caractérisée en ce que** lesdites première et deuxième parties (6, 7) sont réunies l'une à l'autre et forment un angle prédéterminé (α).

13. Selle de bicyclette selon la revendication 4, **caractérisée en ce que** ladite première partie (6) et ladite deuxième partie (7) sont accouplées mobiles en rotation pour permettre une rotation relative de l'une par rapport à l'autre autour d'un axe prédéterminé (X).

14. Selle de bicyclette selon la revendication 4, **caractérisée** ne ce que ladite première partie (6) présente des trous (18) pour recevoir des vis ou rivets (19) destinés à être fixés à l'accessoire (A).
